# EUROPEAN PATENT SPECIFICATION

(11) **EP 1 882 053 B1**
(45) Date of publication and mention of the grant of the patent: **23.12.2015**
(21) Application number: 06721846.1
(22) Date of filing: 20.04.2006
(51) Int. Cl.: C23C 26/00, B05D 7/14, B05D 3/00, C23F 15/00

(54) **BONDABLY COATED METALLIC MEMBER**
BONDIERBAR BESCHICHTETES METALLELEMENT
ÉLÉMENT MÉTALLIQUE REVÊTU DE MANIÈRE À PERMETTRE UNE LIAISON

(30) Priority: 21.04.2005 CA 2504791
(43) Date of publication of application: 30.01.2008
(73) Proprietor: ShawCor Ltd., Toronto, Ontario M9W 1M7 (CA)
(72) Inventor: LAM, C.N. Catherine, Thornhill, Ontario L4J 8J7 (CA); POTTER, David K., Guelph, Ontario N1H 6J2 (CA); STEELE, Robert E., Richmond Hill, Ontario L4C 3Z9 (CA)
(74) Representative: Vleck, Jan Montagu
(86) International application number: PCT/CA2006/000638
(87) International publication number: WO 2006/111027

(56) References cited:
- CA-C- 2 253 225
- DE-A1- 19 509 782
- GB-A- 2 405 375
- JP-A- 04 108 571
- JP-A- 61 118 136
- JP-A- 62 172 030
- KR-B1- 0 158 534
- US-A- 6 065 781
- US-A1- 2002 182 357
- BHAT N.: 'Surface modification of polyethylene films by low temperature plasma' POLYM. SCI. vol. 2, 1994, pages 839 - 844
- MUSTAFAEV A.: 'Progressive technology of the gluing of apparantus and instrument parts' IZVESTIYA VYSSHIKH UCHEBNYKH ZAVEDENII, NEFT I GAS vol. 13, no. 4, 1970, pages 95 - 104, XP003004103

## Description

### Field of Invention

The present invention relates to the preparation of polymeric coated metallic substrates, and in particular polymeric coated metallic substrates having high energy surfaces.

### Background

Layers of low surface energy polymers are often used as protective coatings on metal members against corrosion and against ingress of moisture. For example, polyethylene and polypropylene are commonly included in steel pipe coatings, as shown for example in document DE 19509782.

However, the difficulty in forming a bond to such low surface energy coatings may give rise to problems in use. For example, when pipes intended to be welded together to form pipeline are coated, a short section at either end of the pipe must be left bare (the so-called "cut-back") so that the pipes can be welded together in the field to form a pipeline. After welding, the bare sections and the weld joint must be coated with a suitable anti-corrosion coating (field joint coating) whose performance is expected to equal or exceed that of the coating on the body of the pipe ("mainline coating"). The field joint coating commonly comprises a liquid curable coating, for example an epoxy material. Unfortunately, such materials will not typically form a strong, long-lasting bond to the polyolefin mainline coating because polyolefins, such as polyethylene or polypropylene, have no functional chemical groups to which the liquid coating can attach.

To overcome this, it is known to surface activate low surface energy polymers by subjecting them to a wide variety of conventional surface activation methods, such as for example corona discharge, plasma treatment or flame treatment. Such surface activation creates reactive or polar chemical groups with which a high surface energy coating, such as an epoxy, can react or interact, thereby allowing strong bonding of coatings, inks and adhesives to the polymer. However, known surface activation methods are not viable approach in the case of coated pipe, since the activated surface is only a few molecules thick, generally short-lived, and does not withstand the procedures necessary in the field to clean and decontaminate the surfaces before application of the field joint coating, which may include cleaning with a strong organic solvent and/or physical abrasion, such as by grit blasting.

### Summary of Invention

A bondably-coated metallic member is provided, comprising a metallic member having a low surface energy polymeric coating, said polymeric coating having been surface activated on at least a portion thereof, and having on said surface-activated portion a bondable high surface energy polymeric coating.

A bondably-coated metallic pipe comprising metallic pipe having a low surface energy mainline polymeric coating thereon is provided extending over the pipe except at a bare zone adjacent each end of the pipe that is free from said mainline polymeric coating; a portion of said mainline polymeric coating adjacent each bare zone having been surface activated and having on said surface activated portion a bondable high surface energy polymeric coating.

A method of preparing a bondably coated metallic member is provided comprising the steps of: (a) providing a metallic member; (b) applying a low surface energy polymeric coating to the metallic member; (c) activating at least one portion of the surface of the polymeric coating; (d) applying to the surface-activated portion of the polymeric coating a liquid bondable high surface energy polymeric coating; and (e) solidifying the liquid bondable high surface energy polymeric coating.

A method of preparing a bondably coated metallic pipe is provided comprising the steps of: (a)providing a metallic pipe; (b) applying a low surface energy mainline polymeric coating to the pipe, said mainline polymeric coating extending over the pipe except at a bare zone adjacent each end of the pipe; (c) activating at a least a portion of the mainline polymeric coating, said portion of the mainline polymeric coating being adjacent to a bare zone; (d) applying to each of the surface-activated portions of the mainline polymeric coating a liquid bondable high surface energy polymeric coating; and (e) solidifying the liquid bondable high surface energy polymeric coating.

A method of preparing a pipeline is provided comprising the steps of: (a) providing a first and second bondably-coated metallic pipe comprising metallic pipe having a low surface energy mainline polymeric coating thereon extending over the pipe except at a bare zone adjacent each end of the pipe that is free from said mainline polymeric coating; a portion of said mainline polymeric coating adjacent each bare zone having been surface activated and having on said surface activated portion, a bondable coating comprising a high surface energy polymeric coating that will react with and bond to the mainline coating; (b) mating one bare end of the first bondably-coated metallic pipe with one bare end of the second bondably-coated metallic pipe; (c) welding the end of the first bondably-coated metallic pipe to the end of the second bondably-coated metallic pipe to provide a welded joint; (d) treating at least a portion of the surface of the bondable coating to expose a region having enhanced capability for reacting with bonding to a field joint coating; and (e) applying said field joint coating to the welded joint and over said exposed region of bondable coating.

### Brief Description of the Figures

Figure 1 a schematic illustration of a typical 3-layer polyolefin coating.
Figure 2 is a schematic illustration of plasma surface treatment of a coating at an end of a pipe.
Figure 3 is a schematic illustration of an application of a permanent bondable coating to an end of pipe which has been surface-activated.
Figure 4 is a schematic illustration of the steps in the application of polyolefin coating and a bondable coating to a steel pipe.
Figure 5 is a schematic illustration of the steps in the application of a field joint coating to a steel pipe having a bondable coating.
Figure 6 is a schematic illustration of a liquid coating bondable interface system for a 3-layer polyolefin coating.
Figure 7 is a line graph comparing the percentage adhesive failure of primer coating at the bondable layer/PE interface versus the number of days after flame treatment.
Figure 8 comprises photographs (a) to (d). Photo (a) illustrates failure at the epoxy bondable layer (EBL)/polyethylene interface, polyethylene cohesive failure and cohesive failure of the epoxy joint coating. Photo (b) illustrates failure at the interface between polyethyene and a UV curable bondable layer (UVBL). Photo (c) illustrates failure at the fusion bonded epoxy - polyethylene interface, failure at the UVBL/PE interface and cohesive failure in the epoxy joint coating. Photo (d) illustrates various failure modes on UV bondable layer test dollies.

### Detailed Description

To overcome the difficulty of bonding polar materials to non-polar ones, it is known to modify the surface of the polyolefin in order to promote adhesion to higher surface energy adhesives. This is referred to as "activating" the surface, and consists of attaching functional or polar chemical groups to the surface.

Oxidation of the surface is an effective and well-known method. One common method of accomplishing this is to expose the polyolefin surface to an oxygen-rich flame. Another way is to expose the surface to a corona discharge, which contains oxygen radicals capable of creating oxygenated species, such as hydroxy, carbonyl, and carboxylic acid groups on the surface. Another well-known method of activating the surface of a low surface energy polymer is reacting it with a strong oxidizing agent, such as chromic acid, a peroxide, or halogen gas, such as fluorine or chlorine.

It is also well known to activate a low energy surface by exposing it to high-energy gas plasma, which creates highly reactive species from the ionized gas. The chemical nature of the active species depends upon, and can be controlled in part by, the composition of the gas that makes up the plasma. Thus, active groups other than those based on oxygen can be created on the surface of the low surface energy polymer.

Yet another known method of altering the surface energy and reactivity of a low energy surface is to graft it with a polar or functional polymer, such as an acrylic acid or ester, including esters capable of reaction with epoxy groups, such as glycidal acrylate or glycidal methacrylate. In such cases it is possible to create films of greater thickness than by the previously described processes, but such films are in practice typically still only a few microns thick.

Such processes can provide a high-energy surface capable of bonding to polar adhesives, but it is well known that the surface energy of such treated surfaces can decrease with time. It is also well known that such surfaces are very fragile. In the case of coated pipe, such treatments do not represent a viable approach because it is very common for the pipe to be stored for periods much in excess of the normal life expectancy of the surface treatment. Furthermore, such surfaces are only a few molecules thick, and could not withstand the procedures necessary in the field to clean and decontaminate the surface, such procedures often including cleaning with a strong organic solvent and/or physical abrasion, such as by grit blasting.

Apart from coated pipe, there are numerous other low surface energy polymer-coated rigid structural metal products that are subjected to conditions that are detrimental to surface activation at the time of end use of the product, and that would benefit from provision of a reliably long-lived bondable coating. Such products include, for example, polymer-coated aircraft parts and automotive body parts, such as car bumpers that are intended to be painted or further coated before use.

A further problem with the surface treatment methods described above is that the polar groups formed may not be capable of chemically reacting with the chemical groups in the high surface energy coating. This may lead to a bond that is initially strong, but which is easily dislodged through exposure to the elements, or which simply decreases with time. Such circumstance would limit the formulation choices available for the high surface energy coating.

The present invention provides a method of treating the surface of a low-surface energy polymer in such a way that the ability to bond a high surface energy coating to same is retained for a much longer period of time. The invention provides improved compatibility with the high surface energy coating by providing greater leeway to incorporate chemical groups capable of reacting with the chemical groups in said high surface energy coating. The invention provides treated surfaces which are sufficiently robust to be able to withstand processes in the field for cleaning or decontaminating said treated surface.

In a first aspect, the invention provides a bondably-coated metallic member, comprising a metallic member having a low surface energy polymeric coating, said polymeric coating having been surface activated on at least a portion thereof, and having on said surface-activated portion a bondable high surface energy polymeric coating. Surprisingly, it has been found that with such bondable coatings, bonds of such excellent strength can be achieved that, when multiple layer coatings are subjected to tensile bond strength testing, failure tends to occur predominantly cohesively within one of the layers, and not at the interface between the surface-activated polymer and the bondable coating.

In the most useful applications of the present invention, the metallic member comprises a rigid, self-supporting member, for which it is an important characteristic that coatings applied thereto exhibit strong adhesion to the substrate or to the intermediate coatings on which they are intended to bond. Examples of metallic members in preferred embodiments of the invention include aluminium, aluminium alloy and steel architectural structural and cladding panels, aluminium, copper and zinc roofing members and aircraft and automotive body parts, usually of aluminium, aluminium alloy or steel. In a particularly preferred embodiment, the metallic member comprises pipe, usually steel pipe, and more preferably, steel pipe intended to be employed in pipeline.

In a second aspect, the invention provides a method of preparing a bondably-coated metallic member comprising the steps of: (a) providing a metallic member; (b) applying a low surface energy polymeric coating to the metallic member; (c) activating at least one portion of the surface of the polymeric coating; (d) applying a liquid bondable high surface energy polymeric coating to the surface-activated portion of the low surface energy polymeric coating; and (e) solidifying the liquid bondable high surface energy polymeric coating.

By the term "polymer", as used herein, we mean homo-polymers, copolymers and/or their blends and alloys with other polymers and/or natural and synthetic rubbers, and polymer matrix composites, on their own, or alternatively as an integral and uppermost part of a multi-layer laminated sandwich comprising any materials e.g. polymers, metals or ceramics, or an organic coating on any type of substrate material.

The low surface energy polymeric materials which may be used to prepare the bondably-coated metallic members according to the invention include, but are not limited to: polyolefin homopolymers or copolymers, particularly polyethylene (PE), polypropylene (PP), ultra high molecular weight polyethylene (UHMWPE), blends of polyolefins with other polymers or rubbers; polyvinylidenefluoride (PVDF), polytetra-fluoroethylene (PTFE), fluorinated ethylene-propylene copolymer (FEP) and ethylene propylene diene mixture (EPDM).

In a preferred embodiment of the invention, the low surface energy polymeric coating is a multi-layered polymeric coating having an outer layer comprised of a polyolefin polymer. The most common examples of such are: 2-layer polyolefin coatings, having a layer of polyolefin bonded to the metal surface with an adhesive or sealant, three-layer polyolefin coatings, comprising: (1) a cured primer layer, (2) an adhesive, and (3) a polyolefin top layer, and composite coatings, comprising a gradient composition of fusion-bonded epoxy coating at the surface of the pipe to pure polyolefin at the exterior of the coating. Such polyolefin coatings are well known in the art.

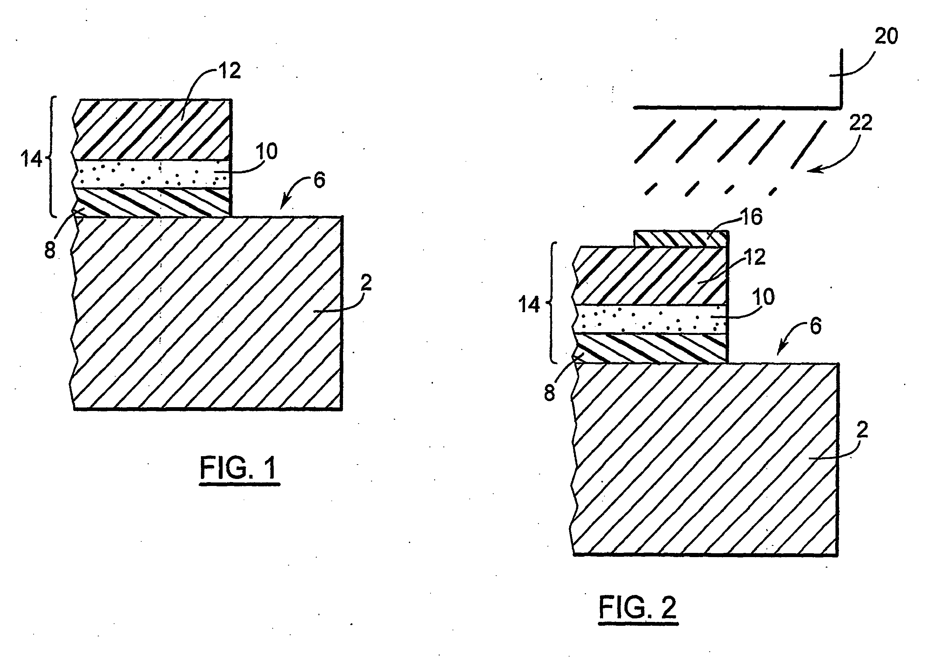

Figure 1 shows a portion of a wall 2 of a coated pipe having a typical three-layer polyolefin mainline coating 14 and a bare cut-back portion 6. As shown in Figure 1, the curable primer layer 8 is most commonly fusion-bonded epoxy powder (FBE) coating. The adhesive layer 10 typically comprises one or more polyolefin copolymers containing polar groups capable of interacting with the curable coating, while retaining the ability to bond well to the polyolefin coating. Such adhesives are typically graft copolymers of ethylene or propylene with very small amounts of maleic anhydride, which forms a covalent bond with the FBE. The top polyolefin layer 12 is typically comprised of polypropylene or polyethylene.

The polymeric coating can be applied to the metallic member using any suitable method known in the art. Generally, the surface of the metallic member to be coated is cleaned prior to the application of the polymeric coating. The surface of the metallic member can be cleaned by chemical means such as the use of a detergent or organic solvent and/or by physical means such as shot blasting or grit blasting. To promote adhesion of the polymeric coating to the surface of metallic member, an acid wash can be also employed to improve surface roughness and to remove soluble salts.

Where the polymeric coating is a three-layer polyolefin coating, the components comprising the polymeric coating can be applied in powder form using electrostatic powder application techniques known in the art. Generally, the metallic member is pre-heated to a suitable powder application temperature of about 240°C. The metallic member can then be dipped into a fluidized bed of FBE and then sprayed with a suitable polyolefin adhesive. The polyolefin polymer can then applied to the metallic member and the excess polymer powder removed. The metallic member is then briefly heated at 240°C to liquefying the polymer powder. The resulting polymeric coating can then be solidified by quenching in cool water bath.

Following the application of the low surface energy polymeric coating, the next step in the preparation of the bondably-coated metallic member of the invention is the activation of at least a portion of the surface of the low surface energy polymeric coating. As discussed above, numerous surface activation techniques are known in the art and any suitable method may be used to activate the surface of the low surface energy polymeric coating.

The surface of the low surface energy polymeric coating may be activated by physical or chemical oxidation techniques. Examples of physical oxidizing methods include but are not limited to: corona discharge, flame treatment, plasma treatment or UV irradiation. Chemical oxidizing agents which may be employed include, but are not limited to: chromic acid, peroxides, and halogen gases such as fluorine and chlorine. Where the polymeric coating comprises a polyolefin, the preferred method of surface activation is plasma treatment. More preferably, the activation method is atmospheric plasma treatment wherein a plasma is generated at ambient pressure using a PlasmaTreat^{®} plasma generator or a similar device. The length of exposure to the plasma will depend on the type of polyolefin employed.

In a preferred form, the plasma is generated by forcing a stream of gas between electrodes. The plasma is composed of ions, radicals, neutral species, and highly energetic electrons. The active species react with the polymeric coating to create polar functional groups on its surface. The types of polar functional groups formed on the substrate surface are dependent on the ionizable gas selected. For example, if an oxygen-containing gas is used, oxygen-containing functional groups, such as hydroxyl and carbonyl groups will be formed, whereas if a nitrogen-containing gas is used, nitrogen-containing functional groups, such as amine groups, will be formed. Suitable gases include but are not limited to: oxygen-containing gases and/or aerosols, such as oxygen (O₂), carbon dioxide (CO₂) carbon monoxide (CO), ozone (O₃), hydrogen peroxide gas (H₂O₂), water vapour (H₂O) or vaporised methanol (CH₃OH) nitrogen-containing gases and/or aerosols, such as nitrous gases (NOₓ), dinitrogen oxide (N₂O), nitrogen (N₂), ammonia (NH₃) or hydrazine (H₂N₄).

In another embodiment of the invention, the preferred method of surface activation is grafting of a polar or functional polymer to the surface of the low surface energy polymeric coating. Surface grafting is particularly useful because it allows improved control over the chemical nature of the surface modified surface. If, for example, maleic anhydide is grafted onto the surface, it will be known that there can be a chemical reaction with, for example, the primary amine-containing component of a two-component liquid epoxy. If, on the other hand, the graft contains primary amine groups, it will be known that it can react with the isocyanate component of a two-component polyurethane coating, or with the epoxy groups of a two-component epoxy coating. Where it is desired to use an epoxy as the bondable coating, it is particularly advantageous to graft an epoxide-bearing molecule, such as glycidyl methacrylate or glycidyl acrylate.

Following surface activation of at a least a portion of the low surface energy polymeric coating, the surface activated portion is coated with a bondable high surface energy polymeric coating. In a preferred embodiment, the bondable high surface energy polymeric coating is applied immediately following surface activation of the low surface energy polymeric coating. Preferably the bondable high surface energy polymeric coating is applied within at least 10 days of surface activation of the low surface energy polymeric coating and more preferably within at least 5 days of surface activation of the low surface energy polymeric coating.

The bondable high surface energy polymeric coating is comprised of a material capable of forming a strong bond with both the activated surface of the low surface energy polymeric coating and the coating which will be applied in the field. Where the metallic member is a pipe intended for field use, the bondable high surface energy polymeric coating is comprised of a material which is also capable of forming a strong bond with field joint coatings such as anti-corrosion coatings. The bond between the bondable coating and the polymeric coating and the field joint coating may be due to Van der Waal or ionic interactions. Preferably, the bondable high surface energy polymeric coating is comprised of a material capable of reacting with reactive groups on the activated low surface energy polymeric coating or the field coating to form covalent bonds.

In an embodiment of the invention, the bondable high surface energy polymeric coating is comprised of a thermoplastic having reactive surface groups. Examples of such thermoplastics include but are not limited to: polyurethane; polyamides, such as poly(hexamethylene adipamide) (Nylon-6,6); polystyrene; polyesters such as polyethylene terephthalate (PET).

In a preferred embodiment of the invention, the bondable high surface energy polymeric coating comprises a solid residue of a curable liquid resin. While the present invention is not limited to any particular theory, it is believed that curable liquid resins provide superior adhesion to the activated low surface energy polymeric coatings. The superior adhesion properties of cured liquid resins are believed to arise as a result of the degree of interaction achievable between functional groups on the activated polymeric surface and the molecules that make up the curable liquid resin, as a result of the mobility of molecules in the liquid state.

Examples of curable liquid resins suitable for practicing the invention include those that cure to relatively hard coatings based on the reaction of a curable liquid resin with a curing agent. Examples comprise coating systems based on the reaction of polyepoxy resins with polyamine curing agents. The two parts are mixed together before application to the activated substrate. Commercial examples of two part epoxy compositions include but are not limited to: E-Primer^{™} (Canusa-CPS, division of ShawCor Ltd. Toronto, Canada); AMERCOAT CC0022A (Ameron International Performance Coatings and Finishes Group, Alpharetta, GA, USA); Prime Shield (Sherwin Williams, Cleveland, OH, USA); SigmaCover CM (Sigma Coatings, Amsterdam, Netherlands); Sigma Novaguard (Sigma Coating); Sigmarite EPH (Sigma Coating).

Another example of a suitable bondable coating includes curable liquid resins employing the reaction of a polyisocyanate with a polyol (polyurethane resins). Commercial examples of suitable 2 component urethane coatings include but are not limited to: Polane Primer-Sealer (Sherwin Williams, Cleveland, OH, USA); 178 HS Primer Surfacer (Ameron International Performance Coatings and Finishes Group, Alpharetta, GA, USA); and SigmaDur (Sigma Coatings, Amsterdam, Netherlands).

A further example of a suitable bondable coating includes curable liquid resins employing the reaction of a polyisocynate with a polyamine (polyurea resins). Commercial examples of 2 component polyurea coatings include but are not limited to: Epoxy System Product # 916 (Epoxy System, Orlando, FL, USA), 930 Polyurea Joint (Epoxy System); PERMAX-700 (Resin Technology Co., Ontario, CA, USA), PERMAX-700 HP (Resin Technology Co.); FX-640 (Fox Industries, Baltimore, MD, USA); FX-645 (Fox Industries); and FX-644CR (Fox Industries).

While the application of liquid or, more preferably, gaseous curing agents is contemplated, in the most preferred form the curable resin is a radiation curable resin and the step of hardening the layer comprises exposing the layer to cure inducing radiation. Ultraviolet light (UV) curable coatings are particularly preferred because of the rapid polymerization of the UV curable compositions. These coatings offer several advantages for the processing of bondably coated products such as pipes. It is desirable for the bondable coating to be hardened to its final state at the end of the bondable coating application process. By achieving the final hardened state by the end of the coating process, marring of the coating due to contact with machinery encountered in subsequent processing steps is avoided. This minimizes repair and rework. A highly reproducible degree of cure is achieved. Additionally, if a suitably thixotropic coating has been formulated, concerns with the timing of the cure event are eliminated since no cure will take place until irradiation with UV light has ensued. This allows the processing operation to be more flexible. Issues associated with the processing of two component coatings, such as the mixing of off-ratio blends, are also eliminated. The excessive heating of the mill coat that can occur with heat activated coating systems is also avoided. These advantages result in a higher quality application of the bondable layer. Furthermore, ultraviolet irradiators are cost effective and easy to use.

Other examples of suitable curable liquid resins include coatings based on free radical polymerization such as acrylic resins and vinyl ether resins. The inventors have formulated a novel acrylate based coating which is particularly suitable for practicing the invention. In an embodiment of the invention, the bondable coating is an acrylated based coating comprising: approximately 43.8 parts tri-functional urethane acrylate (CN929, Sartomer, Exton, PA, USA); approximately 43.8 parts ethoxylated trimethylopropane triacrylate (SR454, Sartomer); approximately 9.2 parts trifunctional acid ester (CD9052, Sartomer); approximately 2.9 parts 1-hydroxy-cyclohexyl-phenyl-ketone (Igracure 184, CIBA Specialty Chemicals, Tarrytown, NY, USA); and approximately 0.3 parts blue colourant in unsaturated ether (PE 33, CPS Colour, Charlotte, NC, USA). The novel acrylate coating is UV curable and is particularly useful in the preparation of coated pipes. The addition of a colourant, or other means that impart a visually distinguishable appearance to the bondable coating as compared to the mainline coating, allows for the preparation of coated pipes which are easily distinguishable as pipes having a bondable coating by simple visual inspection.

The choice of the curable liquid resin will depend on the low surface energy polymeric coating employed and the surface chemistry of the activated portions of the low surface energy polymeric coating. Where the surface chemistry of the activated coating includes hydroxyl groups, it is preferable to use a polyurethane resin as the bondable coating, since the isocyanate component of the polyurethane resin readily reacts with hydroxyl groups. Where the surface chemistry of the coating includes amine or epoxide groups, it is preferable to use an epoxy resin.

Where the metallic member is a pipe, the choice of the curable liquid resin will also depend on the surface chemistry of the field joint coating. Field joint coatings may include liquid coatings, thermoset powder coatings, and polar thermoplastic coatings. Liquid coatings include, but are not limited to, epoxies, polyurethanes, polyureas, and acrylics. Powder coatings include, but are not limited to, epoxy, and phenolics. Thermoplastic coatings include, but are not limited to, polyamides, thermoplastic urethanes, polyolefins grafted with polar functional groups, and hot melt adhesives based on copolymers of ethylene or propylene. The preferred field joint coating is typically a two-component liquid epoxy. In these cases, it is preferable to use either a polyurethane resin or an epoxy resin as the bondable coating.

The bondable high surface energy polymeric coating may be applied by any method suitable for the consistency and hardening characteristics of the particular coating. If the coating is applied as a liquid, examples of such methods are brushing, spraying, rolling, and reverse roll transfer coating. Where the bondable coating is a thermoplastic material, it may be applied by extrusion flame spray, solution coating, or injection moulding. Application of molten high surface energy polymers to the activated surface is best carried out at temperatures below the melting point or the upper operating temperature of the low surface energy polymeric coating to ensure good bonding.

The coatings of the bondably-coated metallic member of the invention exhibit strong adhesion properties and are reliably long-lived. To ensure these characteristics, the applied bondable high surface energy polymeric coating is preferably, relatively thick. The use of a robust bondable coating assists in maintaining the functionality of the coating subsequent to its application. This is particularly advantageous wherein the bondably-coated metallic member is a pipe. In the case of pipes used in the field, it is necessary that the bondable coating be still functional by the time the pipe has been transported to the field, welded up, and is ready for the field joint coating to be applied. In the past, this usually involved the application of some form of interim protection capable of withstanding the handling, storage, transportation, stringing and welding of the pipe. For example, the coating could be protected with plastic tape, an uncoated polyethylene shrink sleeve, a plastic cap, or a peel-away coating.

The present invention provides coatings which will stay intact throughout the processes discussed above, and which are capable of being conveniently and reliably cleaned of any contamination in the field. In the case of pipes, because the weld joint is typically cleaned by blasting it with sand or grit prior to applying the field joint coating, it is particularly useful if the bondable coating is capable of being cleaned in the same way. It is common practice, for example, to lightly blast fusion bonded epoxy mainline coating prior to the application of epoxy field joint coating. Such blast cleaning not only removes contamination, but also exposes a fresh, chemically active surface that is beneficially rough to enhance adhesion. Thus, in a preferred embodiment, the bondable coating is robust enough to be able to withstand brief exposure to the same blasting process as is used to clean the metal, and that it be of a nature that it will not catch and retain the blast medium. In order to withstand blast cleaning, the bondable coating can be formed to be of a substantial thickness, and preferably hard enough that the blast medium will not penetrate into and be captured by the coating. Where a robust bondable coating is desired, it is preferable that metallic member be applied with a bondable coating which is between 1 µm and 5000 µm thick and more preferably between 100 µm and 1000 µm.

Following application of the bondable high surface energy polymeric coating in liquid form to the surface-activated portions of the low surface energy polymeric coating, the liquid bondable coating is solidified by cooling, curing, or drying. In cases where the bondable high surface energy polymeric coating comprises a resin, the bondable coating is solidified by curing methods such as exposure to UV radiation, infrared radiation or heat. In a preferred embodiment of the invention, the bondable high surface energy polymeric coating comprises a curable liquid resin which is curable at temperatures below the upper service temperature of the low surface energy polymeric coating. The inventors have determined that the use of liquid resins which are curable at temperatures below the upper service temperature of the activated substrate provide superior bonding qualities as compared to the bondable coatings comprised of solid or molten resins.

In a further aspect, the invention provides a bondably-coated metallic pipe comprising metallic pipe having a low surface energy mainline polymeric coating thereon extending over the pipe except at a bare zone adjacent each end of the pipe that is free from said mainline coating; a portion of said mainline coating adjacent each bare zone having been surface activated and having on said surface activated portion a bondable high surface energy polymeric coating. As used herein in the context of coated pipes, the term "mainline coating" refers to a coating which is applied to the body of the pipe excluding the cut-back portions at each of the ends of the pipe.

In an embodiment of the invention, the bondable high surface energy polymeric coating is treatable such that treatment of the bondable high surface energy polymeric coating exposes the reactive surface groups on the surface activated portion of the mainline polymeric coating, which are capable of reacting with chemical groups in a liquid resin such as a field coating. The bondable high surface energy polymeric coating may be treatable with an abrasive agent such as shot, grit, or sand. The bondable high surface energy polymeric coating may also be treatable with a chemical agent such as a detergent or a suitable organic solvent which does not negatively affect the ability of the underlying activated portions of the mainline polymeric coating to bond to a liquid resin.

The invention further provides a method of preparing a bondably-coated metallic pipe comprising the steps of: (a) providing a metallic pipe; (b)applying a mainline polymeric coating to the pipe, said mainline polymeric coating extending over the pipe except at a bare zone adjacent each end of the pipe; (c) activating at a least a portion of the mainline polymeric coating, said portion of the mainline polymeric coating being adjacent to a bare zone; (d) applying a liquid bondable high surface energy polymeric coating to each of the surface-activated portions of the mainline polymeric coating; and (e) solidifying the liquid bondable high surface energy polymeric coating.

Any of the polymeric and bondable coatings previously discussed above can be used to prepare the bondably-coated metallic pipe.

In the preparation of a bondably-coated pipe, typically only a portion of the low surface energy polymeric coating will be surface activated. Figure 2 illustrates the use of a plasma generator 20 to generate plasma 22 to treat a portion of the polymeric coating 14 to yield an activated surface 16. As shown in Figure 2, generally only a portion of the polymeric coating 14 adjacent to the cut-back portion 6 of the pipe 2 is surface activated. The cut back portion of the pipe is a bare zone on the pipe which is not coated. Surface activation of the polymeric coating can be achieved by any of the activation methods discussed above including but not limited to the use of physical oxidizing agents (i.e. flame treatment, plasma treatment, corona discharge, UV irradiation), chemical oxidizing agents (i.e. chromic acid, peroxides, halogen gases), and by surface grafting with a functional or polar polymer. Preferably, the polymeric coating is surface activated by atmospheric plasma treatment using a low temperature plasma.

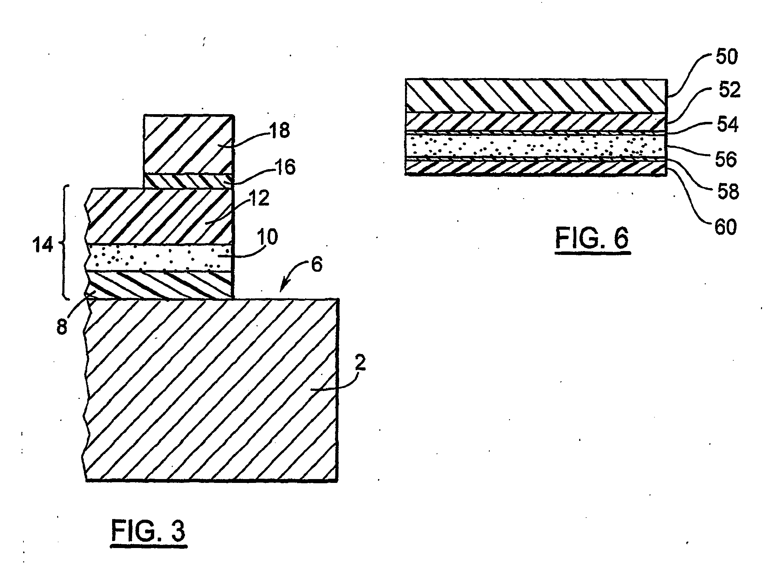

As seen in Figure 3, where the metallic member is a pipe, the bondable high surface energy polymeric coating 18 is applied to the activated portion 16 of the low surface energy polymeric coating 14 adjacent to the cut back portion 6 of the coated pipe 2.

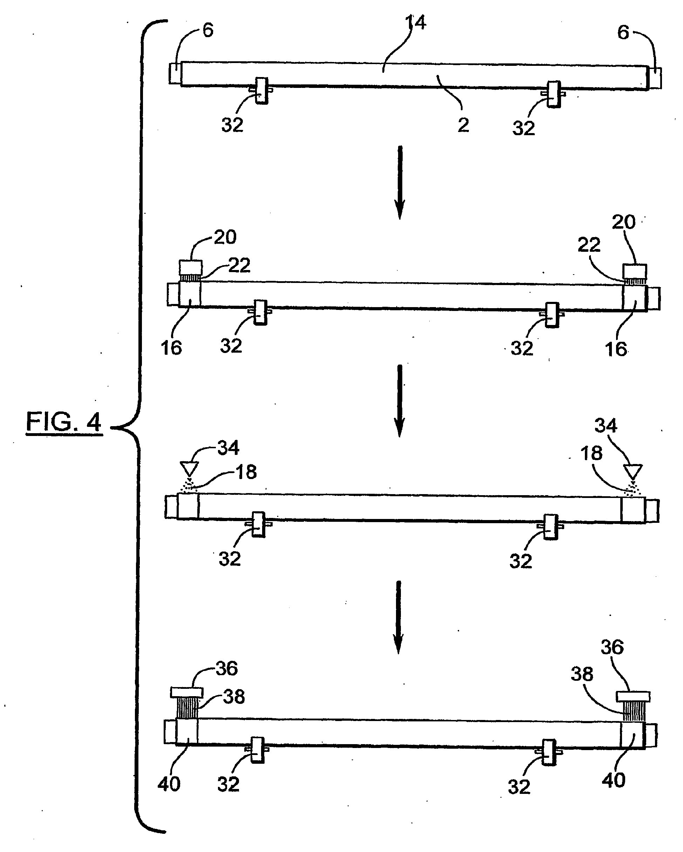

The bondable high surface energy polymeric coating may be any of the liquid coatings discussed above. The selection of the bondable high surface energy polymeric coating will depend on the surface chemistry of both the activated low surface energy polymeric coating and the surface chemistry of the field joint coating. The bondable high surface energy polymeric coating can be applied to the surface-activated portion of the low surface energy polymeric coating using any suitable method known in the art including brushing, spraying, rolling, reverse roll transfer or extrusion. The method of solidifying the coating will depend on the type of coating selected but generally includes exposure to heat, ultraviolet radiation, infrared radiation, drying, or simple cooling in the case of coatings applied in the molten state. Figure 4 illustrates the preparation of a bondably-coated pipe 2 for use in the field. In an embodiment of the invention, a pipe which has been freshly coated with the low surface energy polymeric coating 14 is placed on a rotator 32. The coated pipe 2 is then rotated while the ends of the coated pipe are exposed to plasma 22 produced using a suitable plasma generator 20. The bondable high surface energy polymeric coating 18 comprising a curable liquid resin is then applied to the activated portions 16 of the low surface energy polymeric coating using a suitable means such as a sprayer 34. The bondable high surface energy polymeric coating 18 is then cured to a solid coating 40 by exposing the bondable high surface energy polymeric coating 18, for example to UV radiation 38 from a UV source 36.

In another aspect, the invention provides a method of preparing a pipeline comprising the steps of: (a) providing a first and second bondably-coated metallic pipe comprising metallic pipe having a low surface energy mainline polymeric coating thereon extending over the pipe except at a bare zone adjacent each end of the pipe that is free from said mainline polymeric coating; a portion of said mainline polymeric coating adjacent each bare zone having been surface activated and having on said surface activated portion, a bondable coating comprising a high surface energy polymeric coating that will react with and bond to the surface activated mainline coating and will react with and bond to a field joint coating; (b) mating one bare end of the first bondably-coated metallic pipe with one bare end of the second bondably-coated metallic pipe; (c) welding the end of the first bondably-coated metallic pipe to the end of the second bondably-coated metallic pipe to provide a welded joint; (d) treating at least a portion of the surface of the bondable coating to expose a region having enhanced capability for reacting with bonding to said field joint coating; and (e) applying said field joint coating to the welded joint and over said exposed region of the bondable coating. In an embodiment of the invention, the surface of the bondable coating is treated using an abrasive agent such as shot, grit, or sand. In another embodiment of the invention, the surface of the bondable coating is treated using a chemical agent is detergent or an organic solvent. The type of detergent or organic solvent used will depend on the surface properties of the bondable coating and preferably does not interfere with the ability of the underlying surface activated portions of the low surface energy mainline polymeric coating to bond to a field joint coating.

Any of the polymeric and bondable coatings previously discussed above can be used to prepare the bondably-coated metallic pipe for use in the preparation of a pipeline according to the method of the invention. As previously discussed, the choice of the bondable coating will depend on the surface chemistry of both the activated low surface energy polymeric coating and the surface chemistry of the field joint coating. Preferably the low surface energy polymeric coating comprises a polyolefin such as polyethylene or polypropylene. The field joint coating is preferably a curable liquid resin such as but not limited to: a polyurethane liquid resin, an epoxy liquid resin, a polyurea liquid resin, or an acrylic liquid resin.

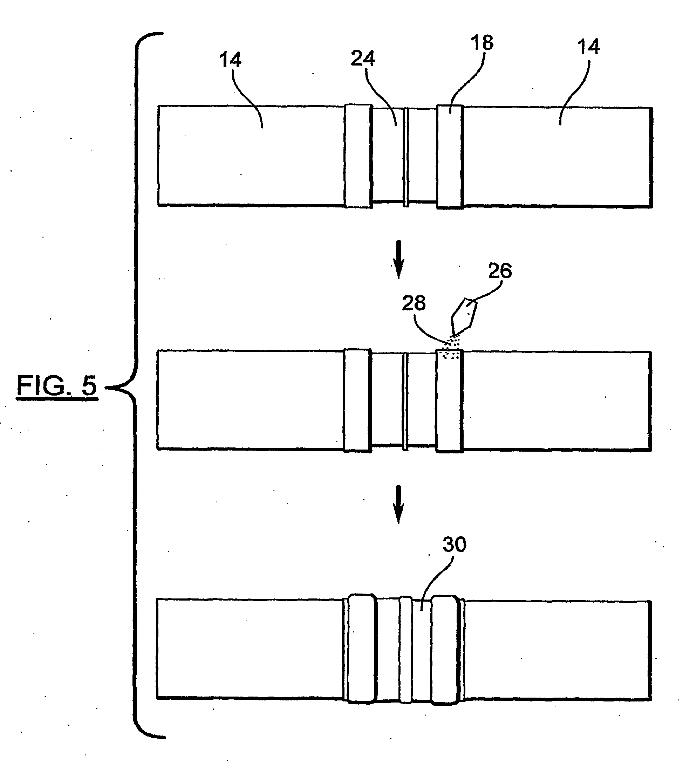

Figure 5 illustrates the preparation of a field joint 24 using a bondably coated pipe 2 prepared in accordance with the invention. In the field, the bare cut back portions 6, as illustrated in Figure 4, of the pipes 2 are mated and the joint 24 sealed by welding the pipes together. The welded joint is then typically cleaned by using a blasting tool 26 to spray sand or grit 28 onto the surface of the bondable high surface energy polymeric coating 18. The sand blasting also cleans the surface of the bondable high surface energy polymeric coating to reveal a fresh, chemically, active surface. The joint compound 30, such as for example a liquid epoxy, is then applied to the bare steel at the joint and to the bondable high surface energy polymeric coating adjacent to the joint to seal the joint. The bondable high surface energy polymeric coating can be applied as a relatively thick layer to ensure that the bondable high surface energy polymeric coating can withstand blast cleaning. Preferably, the thickness of the bondable coating will be between 1 and 5000 µm and more preferably be between 100 and 1000 µm.

Embodiments of the invention will now be described with reference to the following Examples.

### Example One - Surface Energy Retention in Polyolefin Coatings Bonded with an Epoxy or an UV Cured Acrylic Coating

### Materials and Methods

*Preparation of Steel Plates Coated with a Polyolefin Coating -* Steel plates (10" x 4" x ¼") were washed with dish detergent, thoroughly rinsed and dried. Then the plates were thermo-pickled in an oven overnight at 325°C to remove organic contaminants. After the plates were cooled to room temperature, they were gritblasted to SA2.5 (white metal finish) and were immediately placed in an oven to heat at 240°C for 3 hours. The heated plates were dipped in a fusion bonded epoxy (FBE 3M 6233) fluidized powder bath for 3 seconds, followed by a light spray of the maleic anhydride grafted polyethylene adhesive (Borealis Borcoat^{™} ME0433). After that, black polyethylene powder (Novapol PE from Nova Chemicals) was immediately poured over the plate and allowed to sit for 10 seconds, at which point all excess powder was shaken from the plate. The coated plates were placed in the 240°C oven for 5 minutes. Then they were quenched in a cool water bath for approximately 5 minutes. The coated plates were allowed to dry on a shelf.

*Flame Treatment -* The surfaces of the coated plates were cleaned with Isopropyl alcohol before surface treatment. The cleaned coated plates (i.e., PE topcoat) were treated with a blue oxidizing flame at 10 inches/second with two passes over each area.

*Bondable Layer Application -* Two bondable coatings were used in these Examples: a urethane acrylate based UV curable coating (see Table 1 for the formulation composition) and an epoxy coating used in pipeline joint finishing (E-primer Canusa-CPS, Toronto, Canada).

**Table 1 - Composition of the UV curable bondable coating.**

| **Raw Material** | **Chemical Name** | **Function** | **weight %** |
|---|---|---|---|
| CN929 (Sartomer) | tri-functional urethane acrylate | Oligomer | 43.8 |
| SR454 (Sartomer) | ethoxylated trimethylolpropane triacrylate | Monomer | 43.8 |
| CD 9052 (Sartomer) | trifunctional acid ester | Adhesion Promoter | 9.2 |
| Irgacure 184 (CIBA Specialty Chemicals) | 1-Hydroxy-cyclohexyl-phenyl-ketone | Photoinitiator | 2.9 |
| PE 33 (CPS Colors) | blue colourant in unsaturated ester | Colorant | 0.3 |
| Total | | | 100.00 |

The UV bondable layer coating was spread across the plate with a flat-edged metal scraper on the flame treated coated polyethylene surface. The freshly coated plates were then passed through the UV coating apparatus immediately after coating. The apparatus consists of a conveyor belt and an UV light source. Coated plates were transported by the conveyor belt at a speed of 5 ft/min and passed under a Fusion F300 UV light source, located approximately 50 mm above the plate's surface (source focal point). The light bulb used in the F300 fixture was the D series bulb that emits UV light in a wavelength range of 350-400nm. The thickness of the coating was between 3.2 mil (81.28 µm) to 7.1 mil (180.34 µm).

E-primer was mixed at the standard resin to hardener ratio of 6.06:1 by weight. Then it was applied to the flame treated polyethylene coated plates by a sponge. The coated plates were allowed to cure for 2 hours at room temperature. The thickness of the coating was between 5.1 mil (129.54 µm) to 9.5 mil (231.14 µm).

*Application Sequence -* UV curable coating and E-primer were each applied on ten polyethylene coated plates immediately after flame treatment. Twenty plates were left uncoated and stored on a lab shelf.

One day before adhesion testing, the UV curable coating and E-primer was each applied to one surface-treated polyethylene coated plate and cured appropriately. Then these bondable layer coated plates and one each of the previously bondable layer coated (UV and E-primer) plates (on which the bondable layer had been applied immediately after flame treatment) were gritblasted at a pressure of 35 psi.

The thickness of the plate coating, bondable layer and total coating were measured by the Thickness Gauge (DeFelsko; Model PosiTector 6000 FS2; +/-0.1 mil) and recorded.

*Epoxy Coating Application -* After the bondable layer was gritblasted (at 35 psi), the plate was heated in an oven at 60°C for approximately 1 hour. A 2-part epoxy liquid coating (HBE-95, Canusa-CPS, Toronto, Canada) was mixed at a resin:hardener ratio of 4.28:1 and was applied to the heated plates with a flat-edged metal scraper. The epoxy liquid was scraped into the anchor pattern first and then a ~30 mil thick coat was applied. The epoxy coating was allowed to dry at room temperature overnight, followed by oven curing at 60°C for 3 hours.

Figure 6 illustrates the whole coating system for bonding high surface energy coating (e.g. liquid epoxy coating) to polyolefin-coated (e.g. polyethylene coated) pipe. As shown in Figure 6, the pipe is coated with three-layer polyolefin coating comprising: a layer of fusion bonded epoxy 60, a layer of maleic anhydride grafted PE adhesive 58, and a layer of polyethylene 56, the surface 54 of which has been flame treated. A bondable layer (UV or E-primer) 52 is applied to the flame treated surface 54. A layer liquid epoxy (HBE) 50 is applied to the bondable layer 52.

*Pull-off Adhesion Test by Instron 4400R -* Immediately after the epoxy (HBE-95) coating was coated on the heated plates, six dollies were applied to the plate to facilitate a pull-off adhesion test. The dollies were sanded by hand with sandpaper (grit size 320) before being pressed into the coating. After the epoxy coating was cured, a one inch diameter hole saw was used to cut the coating down to the metal around the dollies. The pull-off adhesion test was performed using an Instron 4400R with a 1000lb-load cell and the dollies were pulled vertically at a rate of 0.05 inches/min.

### Results and Discussion

Little or no adhesion was observed on samples for which the polyethylene had not been flame-treated.

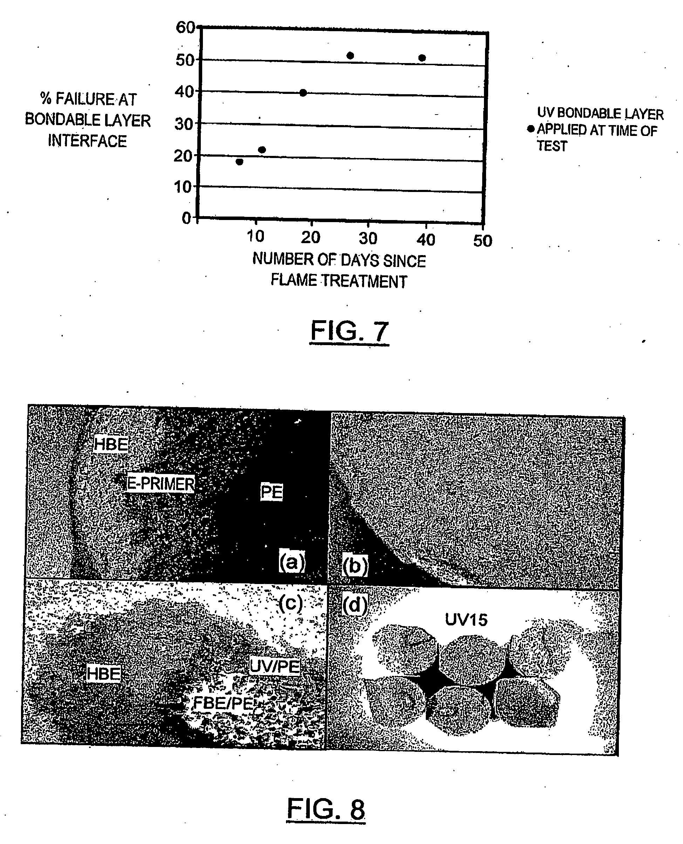

If the bondable layer was applied immediately after flame treatment, failure in the pull-off adhesion test never occurred at the interface between the polyethylene and the bondable layer. However, if there was a significant time interval between surface treatment and application of the bondable layer, a difference was observed in the location of the failure during testing. With the UV curable bondable layer, the amount of failure that occurred at the bondable layer/PE interface increased with this interval (see Figure 7). Further experimental data and mode of failure for the samples can be found in Tables 2 and 3. The percentage values set out in Tables 2 and 3 refer to the relative percentage of cohesive failure (i.e. 70% HBE = 70% of the total bond failure occurred cohesively at the HBE layer) and the relative percentage of adhesion failure (i.e. 30% UV/PE = 30% of the total bond failure occurred adhesively at the interface between polyethylene and the UV curable bondable layer).

**Table 2 -Samples with a UV curable bondable layer applied onto the PE surface at the time of the adhesion test.**

| **Number of days since flame treatment** | **Peak Forces (lbf)** | | | | | | **Max**. **(lbf)** | **Max. (psi)** |
|---|---|---|---|---|---|---|---|---|
| | **1** | **2** | **3** | **4** | **5** | **6** | | |
| 7 | 660.9 | 601.9 | 672.5 | 811.5 | 541.7 | Pop off | 811.5 | 1836.86025 |
| | 70% HBE coh., 30% UV/PE | FBE/PE | 10% UV/PE, 90% HBE coh. | 20% UV/PE, 80% HEB coh. | 20% UV/PE, 80% HBE coh. | 20% UV/PE, 80% HBE coh. | | |
| 11 | 699.3 | 909.8 | 557.6 | 529.7 | 711.4 | Pop off | 909.8 | 2059.36594 |
| | 60% UV/HBE, 20% UV/PE, 10% PE/FBE | 70 % HBE coh., 30% UV/PE | 20% UV/PE, 80% HBE coh. | 20% UV/PE, 80% HBE coh. | 20% UV/PE, 80% HBE coh. | | | |
| 18 | 691 | 523.2 | 556.2 | 638.9 | 668.2 | 727 | 727 | 1645.59138 |
| | 50% UV/PE, 50% HBE coh. | 50% UV/PE, 50% FBE/PE | 40% UV/PE, 60% HBE coh. | 40% UV/PE, 60% HBE coh. | 50% UV/PE, 50% HBE coh. | 10% UV/PE, 90% HBE coh. | | |
| 26 | 719.7 | Pop off | 609.1 | 651.5 | Pop off | 484.8 | 719.7 | 1629.06756 |
| | 5% FBE/PE, 70% HBE coh., 25% PE/UV | 90% UV/PE, 10% HBE coh. | 5% FBE/PE, 85% UV/PE, 10% HBE | 60% FBE/PE, 40% UV/PE | 90% HBE/metal, 10% UV/PE | 2% FBE/PE, 30% HBE coh. 68% UV/PE | | |
| 39 | Pop off | 616.9 | 562.4 | 674.4 | 710.1 | 611.8 | 710.1 | 1607.3376 |
| | UV/PE | HBE/metal | HBE/metal | UV/PE | 90% HBE/metal, 10% UV/PE | UV/PE | | |

**Table 3 -Samples with an epoxy bondable layer (E-primer) applied to the PE surface at the time of the adhesion test.**

| **Number of days since flame treatment** | **Peak Forces (lbf)** | | | | | | **Max. (lbf)** | **Max. (psi)** |
|---|---|---|---|---|---|---|---|---|
| | **1** | **2** | **3** | **4** | **5** | **6** | | |
| 7 | 525.4 | 585 | 460.4 | 791.7 | 425.2 | 510.3 | 791.7 | 1792.04 |
| | 20% E-primer/PE, 40% E-primer coh., 40% FBE/PE | 60% metal/HBE, 40% E-primer coh. | 20% E-primer/PE, 10% metal/HBE, 70% HBE coh. | 50% E-primer coh., 20% HBE coh., 30% metal/HBE | 10% E-primer/PE, 90% E-primer coh. | 15% E-primer/Pe, 60% metal/HBE, 25% E-primer coh. | | |
| 11 | 691.3 | 434.5 | 686.2 | Pop off | Pop off | | 691.3 | 1564.78 |
| | E-primer coh. | 40% E-primer coh., 60% FBE/PE | E-primer coh. | E-primer coh. | E-primer coh. | | | |
| 18 | 491.5 | 716.8 | Dolly to close to plate's edge to test | 617.2 | 420.8 | 667.6 | 716.8 | 1622.50 |
| | 15% HBE coh., 40% E-primer/PE, 45% E-primer coh. | 50% E-primer coh., 50% HBE coh. | | 10% HBE coh., 50% E-primer/PE, 40% E-primer coh. | 25% E-primer/PE, 75% E-primer coh. | FBE/PE | | |
| 26 | 515.2 | 903.6 | Pop off | 677 | 847 | Pop off | 903.6 | 2045.33 |
| | 95% E-primer coh., 5% HBE coh. | 80% E-primer coh., 20% HBE coh. | 90% E-primer coh., 10% E-primer/PE | 25% FBE/PE, 40% HBE coh., 15% PE/E-primer, 20% PE coh. | E-primer coh. | E-primers coh. | | |
| 39 | 309 | 548.5 | Pop off | 462.5 | 527.8 | 461.3 | 548.50 | 1241.55 |
| | 50% HBE/metal, 50% E-primer coh. | 10% E-primer/PE, 90% HBE/metal | 90% E-primer coh., 10% HBE/metal | 20% E-primer coh., 80% HBE/metal | 100% HBE/metal | 100% HBE/metal | | |

Examples of the different failure modes observed during the pull-off adhesion tests are documented in Figure 8. These are photographs of the ends of the pull-off dollies.

## Claims

1. A bondably-coated metallic pipe comprising metallic pipe (2) having a low surface energy mainline polymeric coating (14) thereon extending over the pipe except at a bare zone (6) adjacent each end of the pipe that is free from said mainline polymeric coating (14); a portion (16) of said mainline polymeric coating (14) adjacent each bare zone having been surface activated to create reactive or polar functional groups on said portion of said mainline polymeric coating, and a bondable high surface energy polymeric coating (18) provided on said surface activated portion and bonded thereto by reaction of the bondable high surface energy polymeric coating with the reactive or polar functional groups of the surface activated portion (16) of the mainline polymeric coating (14).

2. The bondably-coated metallic pipe according to claim 1, wherein said low surface energy mainline polymeric coating (14) is selected from a group consisting of: a two-layer coating, a three-layer coating and a gradient coating and an exterior layer of the low surface energy mainline polymeric coating comprises polyolefin.

3. The bondably-coated metallic pipe according to any one of claims 1 to 2, wherein said polyolefin comprises polyethylene or polypropylene.

4. The bondably-coated metallic pipe according to any one of claim 1 to 3, wherein the bondable high surface energy polymeric coating (18) comprises a thermoplastic having reactive surface groups selected from a group consisting of: a polyurethane; a polyamide, a polystyrene and a polyester.

5. The bondably-coated metallic pipe according to any one of claims 1 to 3, wherein the bondable high surface energy polymeric coating (18) comprises a solid residue of a curable liquid resin selected from a group consisting of: a polyurethane resin, an epoxy resin, a polyurea resin, an acrylic resin, and a vinyl ether resin.

6. The bondably-coated metallic pipe according to any one of claims 1 to 5, wherein the bondable coating (18) further comprises a colourant.

7. The bondably-coated metallic pipe according to any one of claims 1 to 6, wherein the bondable coating (18) has a thickness of between 1 and 5000 µm.

8. The bondably-coated metallic pipe according to any one of claims 1 to 6, wherein the bondable coating (18) has a thickness of between 100 and 1000 µm.

9. The bondably-coated metallic pipe according to any one of claims 1 to 8, wherein the bondable high surface energy polymeric coating (18) is treatable with an abrasive agent (28) or a chemical agent (28) and wherein treatment of the bondable high surface energy polymeric coating (18) exposes the reactive surface groups on the surface activated portion of the mainline polymeric coating (14), said reactive surface groups capable of reacting with chemical groups in a liquid resin.

10. A method of preparing a bondably coated metallic pipe comprising the steps of:
(a) providing a metallic pipe (2);
(b) applying a low surface energy mainline polymeric coating (14) to the pipe, said low surface energy mainline polymeric coating (14) extending over the pipe except at a bare zone (6) adjacent each end of the pipe;
(c) surface activating at least a portion (16) of the low surface energy mainline polymeric coating (14) to create reactive or polar functional groups on said portion of said mainline polymeric coating (14), said surface activated portion of the low surface energy mainline polymeric coating being adjacent to a bare zone;
(d) applying a liquid bondable high surface energy polymeric coating (18) to each of the surface activated portions of the mainline polymeric coating; and
(e) solidifying the liquid bondable high surface energy polymeric coating (18);
wherein the bondable high surface energy polymeric coating (18) is bonded to each of the surface activated portions by reaction of the bondable high surface energy polymeric coating (18) with the reactive or polar functional groups of the surface activated portions of the mainline polymeric coating.

11. The method of claim 10, wherein the bondable high surface energy polymeric coating (18) is applied immediately following activation of at least one portion of the surface of the low surface energy mainline polymeric coating (14).

12. The method of claim 10, wherein the bondable high surface energy polymeric coating (18) is applied within 10 days of activation of at least one portion of the surface of the low surface energy mainline polymeric coating (14).

13. The method of claim 10, wherein the bondable high surface energy polymeric coating (18) is applied within 5 days of activation of at least one portion of the surface of the low surface energy mainline polymeric coating (14).

14. The method of any one of claims 10 to 13, wherein the at least one portion of surface of the low surface energy mainline polymeric coating (14) is activated by exposing the surface of the low surface energy mainline polymeric coating to a physical oxidizing agent selected from a group consisting of: corona discharge, flame treatment, plasma treatment, or UV irradiation.

15. The method of any one of claims 10 to 13, wherein the at least one portion of surface of the low surface energy mainline polymeric coating (14) is activated by exposing the surface to a chemical oxidizing agent selected from a group consisting of: chromic acid, a peroxide, and a halogen gas.

16. The method of any one of claims 10 to 13, wherein the at least one portion of surface of the polymeric coating (14) is activated by grafting a functional polymer to the surface.

17. The method of claim 16, wherein the functional polymer is selected from a group consisting of: an acrylic acid and an acrylic ester.

18. The method according to claim 16, wherein the functional polymer comprises an amine group or an epoxy group.

19. The method according to any one of claims 10 to 18, wherein the liquid bondable high surface energy polymeric coating (18) is applied by a method selected from a group consisting of: brushing, spraying, rolling, reverse roll transfer and extrusion.

20. The method according to any one of claims 10 to 19, wherein the liquid bondable high surface energy polymeric coating (18) is solidified by cooling, curing or drying.

21. The method according to any one of claims 10 to 20, wherein the bondable high surface energy polymeric coating (18) comprises a thermoplastic having reactive surface groups, said thermoplastic selected from a group consisting of: a polyurethane; a polyamide, a polystyrene and a polyester.

22. The method according to any one of claims 10 to 20, wherein the bondable high surface energy polymeric coating (18) comprises a solid residue of a curable liquid resin selected from a group consisting of: a polyurethane resin, an epoxy resin, a polyurea resin, an acrylic resin, and a vinyl ether resin.

23. A method of preparing a pipeline comprising the steps of:
(a) providing a first and second bondably-coated metallic pipe comprising metallic pipe (2) having a low surface energy mainline polymeric coating (14) thereon extending over the pipe except at a bare zone (6) adjacent each end of the pipe that is free from said mainline polymeric coating (14); a portion (16) of said mainline polymeric coating (14) adjacent each bare zone having been surface activated and having on said surface activated portion, a bondable coating (18) comprising a high surface energy polymeric coating (18) that will react with and bond to the surface activated mainline coating (16) and will react with and bond to a field joint coating (30);
(b) mating one bare end of the first bondably-coated metallic pipe with one bare end of the second bondably-coated metallic pipe;
(c) welding the end of the first bondably-coated metallic pipe to the end of the second bondably-coated metallic pipe to provide a welded joint;
(d) treating at least a portion of the surface of the bondable coating (18) with an abrasive agent (28) or a chemical agent (28) to expose a region having enhanced capability for reacting with and bonding to said field joint coating (30); and
(e) applying said field joint coating (30) to the welded joint and over said exposed region of the bondable coating (18).

24. The method according to claim 23, wherein the abrasive agent is shot, grit, or sand or the chemical agent is detergent or an organic solvent.

25. The method according to claim 23 or 24, wherein the low surface energy polymeric mainline coating (14) comprises polyethylene or polypropylene, the high surface energy polymeric coating (18) comprises a curable liquid resin selected from a group consisting of: a polyurethane resin, an epoxy resin, a polyurea resin, an acrylic resin, and a vinyl ether resin, and the field joint coating is selected from a group consisting of: a polyurethane liquid resin, an epoxy liquid resin, a polyurea liquid resin, and an acrylic liquid resin.

## Patentansprüche

1. Bindungsfähig beschichtetes metallisches Rohr, das beinhaltet: metallisches Rohr (2) mit einer polymeren Leitungs-Hauptbeschichtung (14) niedriger Oberflächenenergie daran, die sich außer an einer blanken Zone (6) neben jedem Ende des Rohrs, die frei von der genannten polymeren Leitungs-Hauptbeschichtung (14) ist, über das Rohr erstreckt; einen Teil (16) der genannten polymeren Leitungs-Hauptbeschichtung (14) neben jeder blanken Zone, der oberflächenaktiviert wurde, um reaktive oder polare funktionelle Gruppen auf dem genannten Teil der genannten polymeren Leitungs-Hauptbeschichtung entstehen zu lassen, und eine bindungsfähige polymere Beschichtung (18) hoher Oberflächenenergie, die auf dem genannten oberflächenaktivierten Teil bereitgestellt und durch Reaktion der bindungsfähigen polymeren Beschichtung hoher Oberflächenenergie mit den reaktiven oder polaren funktionellen Gruppen des oberflächenaktivierten Teils (16) der polymeren Leitungs-Hauptbeschichtung (14) daran gebunden ist.

2. Bindungsfähig beschichtetes metallisches Rohr nach Anspruch 1, wobei die genannte polymere Leitungs-Hauptbeschichtung (14) niedriger Oberflächenenergie aus einer Gruppe bestehend aus: einer zweilagigen Beschichtung, einer dreilagigen Beschichtung und einer Gradientenbeschichtung ausgewählt ist und eine Außenlage der polymeren Leitungs-Hauptbeschichtung niedriger Oberflächenenergie Polyolefin beinhaltet.

3. Bindungsfähig beschichtetes metallisches Rohr nach einem der Ansprüche 1 bis 2, wobei das genannte Polyolefin Polyethylen oder Polypropylen beinhaltet.

4. Bindungsfähig beschichtetes metallisches Rohr nach einem der Ansprüche 1 bis 3, wobei die bindungsfähige polymere Beschichtung (18) hoher Oberflächenenergie einen Thermoplasten mit reaktiven Oberflächengruppen beinhaltet, die ausgewählt sind aus einer Gruppe bestehend aus: einem Polyurethan; einem Polyamid; einem Polystyrol und einem Polyester.

5. Bindungsfähig beschichtetes metallisches Rohr nach einem der Ansprüche 1 bis 3, wobei die bindungsfähige polymere Beschichtung (18) hoher Oberflächenenergie einen festen Rückstand eines aushärtbaren flüssigen Harzes beinhaltet, das ausgewählt ist aus einer Gruppe bestehend aus: einem Polyurethanharz, einem Epoxidharz, einem Polyharnstoffharz, einem Acrylharz und einem Vinyletherharz.

6. Bindungsfähig beschichtetes metallisches Rohr nach einem der Ansprüche 1 bis 5, wobei die bindungsfähige Beschichtung (18) ferner einen Farbstoff beinhaltet.

7. Bindungsfähig beschichtetes metallisches Rohr nach einem der Ansprüche 1 bis 6, wobei die bindungsfähige Beschichtung (18) eine Dicke zwischen 1 und 5000 µm hat.

8. Bindungsfähig beschichtetes metallisches Rohr nach einem der Ansprüche 1 bis 6, wobei die bindungsfähige Beschichtung (18) eine Dicke zwischen 100 und 1000 µm hat.

9. Bindungsfähig beschichtetes metallisches Rohr nach einem der Ansprüche 1 bis 8, wobei die bindungsfähige polymere Beschichtung (18) hoher Oberflächenenergie mit einem Abrasiv (28) oder einem chemischen Mittel (28) behandelt werden kann und wobei die Behandlung der bindungsfähigen polymeren Beschichtung (18) hoher Oberflächenenergie die reaktiven Oberflächengruppen an dem oberflächenaktivierten Teil der polymeren Leitungs-Hauptbeschichtung (14) freilegt, wobei die genannten reaktiven Oberflächengruppen mit chemischen Gruppen in einem flüssigen Harz reagieren können.

10. Verfahren zum Herstellen eines bindungsfähig beschichteten metallischen Rohrs, das die folgenden Schritte beinhaltet:
(a) Bereitstellen eines metallisches Rohrs (2);
(b) Auftragen einer polymeren Leitungs-Hauptbeschichtung (14) niedriger Oberflächenenergie auf das Rohr, wobei die genannte polymere Leitungs-Hauptbeschichtung (14) niedriger Oberflächenenergie sich außer an einer blanken Zone (6) neben jedem Ende des Rohrs über das Rohr erstreckt;
(c) Oberflächenaktivieren von wenigstens einem Teil (16) der polymeren Leitungs-Hauptbeschichtung (14) niedriger Oberflächenenergie, um auf dem genannten Teil der genannten polymeren Leitungs-Hauptbeschichtung (14) reaktive oder polare funktionelle Gruppen entstehen zu lassen, wobei der genannte oberflächenaktivierte Teil der polymeren Leitungs-Hauptbeschichtung niedriger Oberflächenenergie neben einer blanken Zone liegt;
(d) Auftragen einer flüssigen bindungsfähigen polymeren Beschichtung (18) hoher Oberflächenenergie auf jeden der oberflächenaktivierten Teile der polymeren Leitungs-Hauptbeschichtung und
(e) Erhärtenlassen der flüssigen bindungsfähigen polymeren Beschichtung (18) hoher Oberflächenenergie;
wobei die bindungsfähige polymere Beschichtung (18) hoher Oberflächenenergie durch Reaktion der bindungsfähigen polymeren Beschichtung (18) hoher Oberflächenenergie mit den reaktiven oder polaren funktionellen Gruppen der oberflächenaktivierten Teile der polymeren Leitungs-Hauptbeschichtung an jeden der oberflächenaktivierten Teile gebunden wird.

11. Verfahren nach Anspruch 10, wobei die bindungsfähige polymere Beschichtung (18) hoher Oberflächenenergie unmittelbar im Anschluss an die Aktivierung von wenigstens einem Teil der Oberfläche der polymeren Leitungs-Hauptbeschichtung (14) niedriger Oberflächenenergie aufgetragen wird.

12. Verfahren nach Anspruch 10, wobei die bindungsfähige polymere Beschichtung (18) hoher Oberflächenenergie innerhalb von 10 Tagen nach der Aktivierung von wenigstens einem Teil der Oberfläche der polymeren Leitungs-Hauptbeschichtung (14) niedriger Oberflächenenergie aufgetragen wird.

13. Verfahren nach Anspruch 10, wobei die bindungsfähige polymere Beschichtung (18) hoher Oberflächenenergie innerhalb von 5 Tagen nach der Aktivierung von wenigstens einem Teil der Oberfläche der polymeren Leitungs-Hauptbeschichtung (14) niedriger Oberflächenenergie aufgetragen wird.

14. Verfahren nach einem der Ansprüche 10 bis 13, wobei der wenigstens eine Oberflächenteil der polymeren Leitungs-Hauptbeschichtung (14) niedriger Oberflächenenergie dadurch aktiviert wird, dass die Oberfläche der polymeren Leitungs-Hauptbeschichtung niedriger Oberflächenenergie einem physikalischen Oxidationsmittel ausgesetzt wird, das ausgewählt ist aus einer Gruppe bestehend aus: Koronaentladung, Flammenbehandlung, Plasmabehandlung oder UV-Bestrahlung.

15. Verfahren nach einem der Ansprüche 10 bis 13, wobei der wenigstens eine Oberflächenteil der polymeren Leitungs-Hauptbeschichtung (14) niedriger Oberflächenenergie dadurch aktiviert wird, dass die Oberfläche einem chemischen Oxidationsmittel ausgesetzt wird, das ausgewählt ist aus einer Gruppe bestehend aus: Chromsäure, einem Peroxid und einem Halogengas.

16. Verfahren nach einem der Ansprüche 10 bis 13, wobei der wenigstens eine Oberflächenteil der polymeren Beschichtung (14) durch Aufpfropfen eines funktionellen Polymers auf die Oberfläche aktiviert wird.

17. Verfahren nach Anspruch 16, wobei das funktionelle Polymer ausgewählt ist aus einer Gruppen bestehend aus: einer Acrylsäure und einem Acrylester.

18. Verfahren nach Anspruch 16, wobei das funktionelle Polymer eine Amingruppe oder eine Epoxidgruppe beinhaltet.

19. Verfahren nach einem der Ansprüche 10 bis 18, wobei die flüssige bindungsfähige polymere Beschichtung (18) hoher Oberflächenenergie mit einem Verfahren aufgetragen wird, das ausgewählt ist aus einer Gruppe bestehend aus: Pinselauftrag, Spritzen, Rollen, Umkehrtransfer und Extrusion.

20. Verfahren nach einem der Ansprüche 10 bis 19, wobei die flüssige bindungsfähige polymere Beschichtung (18) hoher Oberflächenenergie durch Kühlen, Aushärten oder Trocknen gefestigt wird.

21. Verfahren nach einem der Ansprüche 10 bis 20, wobei die bindungsfähige polymere Beschichtung (18) hoher Oberflächenenergie (18) einen Thermoplasten beinhaltet, der reaktive Oberflächengruppen hat, wobei der genannte Thermoplast ausgewählt ist aus einer Gruppe bestehend aus: einem Polyurethan, einem Polyamid, einem Polystyrol und einem Polyester.

22. Verfahren nach einem der Ansprüche 10 bis 20, wobei die bindungsfähige polymere Beschichtung (18) hoher Oberflächenenergie einen festen Rückstand eines aushärtbaren flüssigen Harzes beinhaltet, das ausgewählt ist aus einer Gruppe bestehend aus: einem Polyurethanharz, einem Epoxidharz, einem Polyharnstoffharz, einem Acrylharz und einem Vinyletherharz.

23. Verfahren zum Anfertigen einer Rohrleitung, das die folgenden Schritte beinhaltet:
(a) Bereitstellen eines ersten und eines zweiten bindungsfähig beschichteten metallischen Rohrs, die beinhalten: metallisches Rohr (2) mit einer polymeren Leitungs-Hauptbeschichtung (14) niedriger Oberflächenenergie daran, die sich außer an einer blanken Zone (6) neben jedem Ende des Rohrs, die frei von der genannten polymeren Leitungs-Hauptbeschichtung (14) ist, über das Rohr erstreckt; einen Teil (16) der genannten polymeren Leitungs-Hauptbeschichtung (14) neben jeder blanken Zone, der oberflächenaktiviert wurde und auf dem genanntenoberflächenaktivierten Teil eine bindungsfähige Beschichtung (18) hat, die eine polymere Beschichtung (18) hoher Oberflächenenergie beinhaltet, die mit der oberflächenaktivierten Leitungs-Hauptbeschichtung (16) reagiert und sich an sie bindet und mit einer Feldverbindungsbeschichtung (30) reagiert und sich an sie bindet;
(b) Zusammenfügen eines blanken Endes des ersten bindungsfähig beschichteten metallischen Rohrs mit einem blanken Ende des zweiten bindungsfähig beschichteten metallischen Rohrs;
(c) Verschweißen des Endes des ersten bindungsfähig beschichteten metallischen Rohrs mit dem Ende des zweiten bindungsfähig beschichteten metallischen Rohrs, um eine Schweißverbindung bereitzustellen;
(d) Behandeln wenigstens eines Teils der Oberfläche der bindungsfähigen Beschichtung (18) mit einem Abrasiv (28) oder einem chemischen Mittel (28), um eine Region freizulegen, die eine verbesserte Fähigkeit zum Reagieren mit und Binden an die genannte Feldverbindungsbeschichtung (30) hat; und
(e) Auftragen der genannten Feldverbindungsbeschichtung (30) auf die Schweißverbindung und über die genannte freigelegte Region der bindungsfähigen Beschichtung (18).

24. Verfahren nach Anspruch 23, wobei das Abrasiv kugeliges Strahlmittel, kantiges Strahlmittel oder Sand ist oder das chemische Mittel ein Detergens oder ein organisches Lösungsmittel ist.

25. Verfahren nach Anspruch 23 oder 24, wobei die polymere Leitungs-Hauptbeschichtung (14) niedriger Oberflächenenergie Polyethylen oder Polypropylen beinhaltet, die polymere Beschichtung (18) hoher Oberflächenenergie ein aushärtbares flüssiges Harz beinhaltet, das ausgewählt ist aus einer Gruppe bestehend aus: einem Polyurethanharz, einem Epoxidharz, einem Polyharnstoffharz, einem Acrylharz und einem Vinyletherharz, und die Feldverbindungsbeschichtung ausgewählt ist aus einer Gruppe bestehend aus: einem flüssigen Polyurethanharz, einem flüssigen Epoxidharz, einem flüssigen Polyharnstoffharz und einem flüssigen Acrylharz.

## Revendications

1. Tuyau métallique revêtu de manière à permettre une liaison comprenant un tuyau métallique (2) à revêtement polymérique de conduite principale de faible énergie de surface (14) s'étendant sur le tuyau à l'exception d'une zone dénudée (6) adjacente à chaque extrémité du tuyau qui est dépourvue dudit revêtement polymérique de conduite principale (14) ; une partie (16) dudit revêtement polymérique de conduite principale (14) adjacente à chaque zone dénudée ayant été activée en surface pour créer des groupes fonctionnels réactifs ou polaires sur ladite partie dudit revêtement polymérique de conduite principale, et un revêtement polymérique de haute énergie de surface pouvant être lié (18) appliqué sur ladite partie de surface activée et lié à celle-ci par réaction du revêtement polymérique de haute énergie de surface pouvant être lié avec les groupes fonctionnels réactifs ou polaires de la partie de surface activée (16) du revêtement polymérique de conduite principale (14).

2. Tuyau métallique revêtu de manière à permettre une liaison selon la revendication 1, dans lequel ledit revêtement polymérique de conduite principale de faible énergie de surface (14) est sélectionné dans un groupe consistant en : un revêtement à deux couches, un revêtement à trois couches et un revêtement à gradient et une couche extérieure du revêtement polymérique de conduite principale de faible énergie de surface comprend une polyoléfine.

3. Tuyau métallique revêtu de manière à permettre une liaison selon l'une quelconque des revendications 1 à 2, dans lequel ladite polyoléfine comprend le polyéthylène ou le polypropylène.

4. Tuyau métallique revêtu de manière à permettre une liaison selon l'une quelconque des revendications 1 à 3, dans lequel le revêtement polymérique de haute énergie de surface pouvant être lié (18) comprend un thermoplastique comportant des groupes de surface réactifs sélectionné dans un groupe consistant en : un polyuréthane ; un polyamide, un polystyrène et un polyester.

5. Tuyau métallique revêtu de manière à permettre une liaison selon l'une quelconque des revendications 1 à 3, dans lequel le revêtement polymérique de haute énergie de surface pouvant être lié (18) comprend un résidu solide d'une résine liquide durcissable sélectionnée dans un groupe consistant en : une résine polyuréthane, une résine époxy, une résine polyurée, une résine acrylique et une résine d'éther vinylique.

6. Tuyau métallique revêtu de manière à permettre une liaison selon l'une quelconque des revendications 1 à 5, dans lequel le revêtement pouvant être lié (18) comprend en outre un colorant.

7. Tuyau métallique revêtu de manière à permettre une liaison selon l'une quelconque des revendications 1 à 6, dans lequel le revêtement pouvant être lié (18) a une épaisseur entre 1 et 5000 µm.

8. Tuyau métallique revêtu de manière à permettre une liaison selon l'une quelconque des revendications 1 à 6, dans lequel le revêtement pouvant être lié (18) a une épaisseur entre 100 et 1000 µm.

9. Tuyau métallique revêtu de manière à permettre une liaison selon l'une quelconque des revendications 1 à 8, dans lequel le revêtement polymérique de haute énergie de surface pouvant être lié (18) est traitable avec un agent abrasif (28) ou un agent chimique (28) et dans lequel le traitement du revêtement polymérique de haute énergie de surface pouvant être lié (18) expose les groupes de surface réactifs sur la partie de surface activée du revêtement polymérique de conduite principale (14), lesdits groupes de surface réactifs étant capables de réagir avec des groupes chimiques dans une résine liquide.

10. Procédé de préparation d'un tuyau métallique revêtu de manière à permettre une liaison comprenant les étapes consistant à :
(a) fournir un tuyau métallique (2) ;
(b) appliquer un revêtement polymérique de conduite principale de faible énergie de surface (14) sur le tuyau, ledit revêtement polymérique de conduite principale de faible énergie de surface (14) s'étendant par-dessus le tuyau à l'exception d'une zone dénudée (6) adjacente à chaque extrémité du tuyau ;
(c) activer la surface d'au moins une partie (16) du revêtement polymérique de conduite principale de faible énergie de surface (14) pour créer des groupes fonctionnels réactifs ou polaires sur ladite partie dudit revêtement polymérique de conduite principale (14), ladite partie de surface activée dudit revêtement polymérique de conduite principale de faible énergie de surface étant adjacente à une zone dénudée ;
(d) appliquer un revêtement polymérique de haute énergie de surface pouvant être lié liquide (18) sur chacune des parties de surface activée du revêtement polymérique de conduite principale ; et
(e) solidifier le revêtement polymérique de haute énergie de surface pouvant être lié liquide (18);
dans lequel le revêtement polymérique de haute énergie de surface pouvant être lié (18) est lié à chacune des parties de surface activée par réaction du revêtement polymérique de haute énergie de surface pouvant être lié (18) avec les groupes fonctionnels réactifs ou polaires des parties de surface activée du revêtement polymérique de conduite principale.

11. Procédé selon la revendication 10, dans lequel le revêtement polymérique de haute énergie de surface pouvant être lié (18) est appliqué immédiatement après l'activation d'au moins une partie de la surface du revêtement polymérique de conduite principale de faible énergie de surface (14).

12. Procédé selon la revendication 10, dans lequel le revêtement polymérique de haute énergie de surface pouvant être lié (18) est appliqué dans les 10 jours qui suivent l'activation d'au moins une partie de la surface du revêtement polymérique de conduite principale de faible énergie de surface (14).

13. Procédé selon la revendication 10, le revêtement polymérique de haute énergie de surface pouvant être lié (18) est appliqué dans les 5 jours qui suivent l'activation d'au moins une partie de la surface du revêtement polymérique de conduite principale de faible énergie de surface (14).

14. Procédé selon l'une quelconque des revendications 10 à 13, dans lequel l'au moins une partie de la surface du revêtement polymérique de conduite principale de faible énergie de surface (14) est activée en exposant la surface du revêtement polymérique de conduite principale de faible énergie de surface à un agent oxydant physique sélectionné dans un groupe consistant en : décharge par effet de couronne, traitement à la flamme, traitement au plasma ou irradiation ultraviolette.

15. Procédé selon l'une quelconque des revendications 10 à 13, dans lequel l'au moins une partie de la surface du revêtement polymérique de conduite principale de faible énergie de surface (14) est activée en exposant la surface à un agent oxydant chimique sélectionné dans un groupe consistant en : acide chromique, un peroxyde, et un gaz halogène.

16. Procédé selon l'une quelconque des revendications 10 à 13, dans lequel l'au moins une partie de la surface du revêtement polymérique (14) est activée en greffant un polymère fonctionnel sur la surface.

17. Procédé selon la revendication 16, dans lequel le polymère fonctionnel est sélectionné dans un groupe consistant en : un acide acrylique et un ester acrylique.

18. Procédé selon la revendication 16, dans lequel le polymère fonctionnel comprend un groupe amine et un groupe époxy.

19. Procédé selon l'une quelconque des revendications 10 à 18, dans lequel le revêtement polymérique de haute énergie de surface pouvant être lié liquide (18) est appliqué par un procédé sélectionné dans un groupe consistant en : brossage, pulvérisation, application au rouleau, transfert par rouleau inversé et extrusion.

20. Procédé selon l'une quelconque des revendications 10 à 19, dans lequel le revêtement polymérique de haute énergie de surface pouvant être lié liquide (18) est solidifié par refroidissement, cuisson ou séchage.

21. Procédé selon l'une quelconque des revendications 10 à 20, dans lequel le revêtement polymérique de haute énergie de surface pouvant être lié (18) comprend un thermoplastique ayant des groupes de surface réactifs, ledit thermoplastique étant sélectionné dans un groupe consistant en : un polyuréthane ; un polyamide, un polystyrène et un polyester.

22. Procédé selon l'une quelconque des revendications 10 à 20, dans lequel le revêtement polymérique de haute énergie de surface pouvant être lié (18) comprend un résidu solide d'une résine liquide durcissable sélectionnée dans un groupe consistant en : une résine polyuréthane, une résine époxy, une résine polyurée, une résine acrylique et une résine d'éther vinylique.

23. Procédé de préparation d'un pipeline comprenant les étapes consistant à :
(a) fournir un premier et un second tuyau métallique revêtu de manière à permettre une liaison comprenant un tuyau métallique (2) à revêtement polymérique de conduite principale de faible énergie de surface (14) s'étendant sur le tuyau à l'exception d'une zone dénudée (6) adjacente à chaque extrémité du tuyau qui est dépourvue dudit revêtement polymérique de conduite principale (14) ; une partie (16) dudit revêtement polymérique de conduite principale (14) adjacente à chaque zone dénudée ayant été activée en surface et comportant sur ladite partie de surface activée, un revêtement pouvant être lié (18) comprenant un revêtement polymérique de haute énergie de surface pouvant être lié (18) qui réagira et se liera avec le revêtement de conduite principale à surface activée (16) et réagira et se liera avec un revêtement de raccord in situ (30) ;
(b) mettre bout à bout une extrémité dénudée du premier tuyau métallique revêtu de manière à permettre une liaison et une extrémité dénudée du second tuyau métallique revêtu de manière à permettre une liaison ;
(c) souder l'extrémité du premier tuyau métallique revêtu de manière à permettre une liaison à l'extrémité du second tuyau métallique revêtu de manière à permettre une liaison pour fournir un joint soudé ;
(d) traiter au moins une partie de la surface du revêtement pouvant être lié (18) à un agent abrasif (28) ou un agent chimique (28) pour exposer une région ayant une capacité rehaussée de réaction et de liaison avec ledit revêtement de raccord in situ (30) ; et
(e) appliquer ledit revêtement de raccord in situ (30) sur le raccord soudé et par-dessus ladite région exposée du revêtement pouvant être lié (18).

24. Procédé selon la revendication 23, dans lequel l'agent abrasif est de la grenaille ronde, de la grenaille angulaire ou du sable ou l'agent chimique est un détergent ou un solvant organique.

25. Procédé selon la revendication 23 ou 24, dans lequel le revêtement polymérique de conduite principale de faible énergie de surface (14) comprend du polyéthylène ou du polypropylène, le revêtement polymérique de haute énergie de surface (18) comprend une résine liquide durcissable sélectionnée dans un groupe consistant en : une résine polyuréthane, une résine époxy, une résine polyurée, une résine acrylique et une résine d'éther vinylique, et le revêtement de raccord in situ est sélectionné dans un groupe consistant en : résine polyuréthane liquide, résine époxy liquide, résine polyurée liquide et résine acrylique liquide.
